(19) Europäisches Patentamt
European Patent Office
Office européen des brevets

(11) **EP 1 731 883 B1**

(12) **EUROPÄISCHE PATENTSCHRIFT**

(45) Veröffentlichungstag und Bekanntmachung des Hinweises auf die Patenterteilung:
**02.11.2011 Patentblatt 2011/44**

(51) Int Cl.:
*G01F 25/00* (2006.01)     *G01F 1/66* (2006.01)

(21) Anmeldenummer: **05012517.8**

(22) Anmeldetag: **10.06.2005**

(54) **Verfahren zur Erfassung einer Geometrieänderung eines Ultraschalldurchflussmesskanals**

Method for detecting a geometry change of an ultrasonic flow measuring channel

Procédé pour détecter un changement géométrique d'un canal de mesure de débit par ultrasons

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**13.12.2006 Patentblatt 2006/50**

(73) Patentinhaber: **Landis+Gyr GmbH**
**90459 Nürnberg (DE)**

(72) Erfinder:
• **Reissinger, Achim**
**91522 Ansbach (DE)**
• **Rother, Stephan**
**90451 Nürnberg (DE)**
• **Gärtner, Franz-Georg**
**90461 Nürnberg (DE)**
• **Grünleitner, Johann**
**90482 Nürnberg (DE)**

(74) Vertreter: **Bauerschmidt, Peter et al**
**Rau, Schneck & Hübner**
**Patentanwälte**
**Königstrasse 2**
**90402 Nürnberg (DE)**

(56) Entgegenhaltungen:
**EP-A- 0 762 086     EP-A- 0 785 443**
**DE-A1- 10 318 779   US-A1- 2003 131 667**
**US-B1- 6 766 276**

## Beschreibung

Die Erfindung bezieht sich auf ein Messverfahren für einen Ultraschallmesskanal wobei ein Ultraschallanregungssignal mit einer Amplitude und einer Anzahl Taktimpulsen von einem ersten Ultraschallwandler ausgesendet wird und ein daraus resultierendes Ultraschallwellensignal von einem zweiten Ultraschallwandler empfangen wird, um Geometrieänderungen des Messkanals zu erfassen.

Stand der Technik

Allen bekannten Messverfahren für Ultraschallmesskanäle liegt die gemeinsame Aufgabe zugrunde, dass möglichst verlustfrei hochfrequente akustische Signale, vorzugsweise Ultraschallsignale, in ein zu untersuchendes Medium eingekoppelt werden, um zumeist nach dem Prinzip der Laufzeitdifferenzmessung (Mitnahmeeffekt) die Laufzeit von innerhalb des Mediums reflektierten Ultraschallwellen zu erfassen. Aus der Laufzeitdifferenz der mit dem bzw. gegen das Medium ausgesandten Ultraschallsignale kann dann die Fliessgeschwindigkeit des Mediums selbst ermittelt werden.

Im Messkanal einer Ultraschallmessanordnung wird das durchfliessende Medium unter Berücksichtigung seines Strömungsverhaltens Integrierend erfasst, d. h. die über den gesamten Querschnitt des Messkanals variable Strömungsgeschwindigkeit des Volumenstroms wird durch einen geeigneten Messaufbau summarisch erfasst und gemittelt (Integralmittelwert).

Diese "integrierende Erfassung des gesamten Volumenstroms" wird gegenwärtig über die möglichst vollständige Erfassung des vom Ultraschallsender abgegebenen Schallfeldes unter Ausnutzung der Reflexionseigenschaften an Grenzschichten oder über die Erzeugung nahezu ebener Wellen und Absorption aller störenden Wellenzüge erreicht.

Die Messung mittels Ultraschall geniesst wegen ihrer Genauigkeit und der geringen Messdauer eine besondere Stellung im Bereich der Durchflussmessverfahren, zu denen beispielsweise auch die Durchflussmessung nach dem Flügelradprinzip gehört. Ein bekanntes Phänomen bei der Ultraschalldurchflussmessung ist, dass von einem ersten Ultraschallwandler "keulenförmig" ausgesandte Ultraschallimpulse bei einem zweiten, empfangenden Ultraschallwandler als eine Überlagerung aus einem Direktstrahl und mindestens einem Reflektionsstrahl erfasst wird. Der Direktstrahl ist derjenige Anteil des empfangenen Ultraschallwellensignals, der unmittelbar durch das beaufschlagte Strömungsmedium beim zweiten Ultraschallwandler eintrifft. Derjenige Anteil des empfangenen Ultraschallwellensignals, der an der Wandung des durchströmten Messkanals reflektiert wird, legt einen gegenüber dem Direktstrahl veränderten Laufweg zurück und trifft demzufolge mit zeitlichem Versatz bzw. phasenverschoben bei dem zweiten Ultraschallwandler ein.

Mit der Kenntnis, dass das empfangene Signal am zweiten Ultraschallwandler eine derartig Überlagerung darstellt, die von der Kanalgeometrie und damit von einer möglichen Verschmutzung bzw. Abtragung innerhalb des gesamten Messkanals abhängig ist, gehört diese exakte Laufzeitmessung bereits seit geraumer Zeit zum Stand der Technik.

Da üblicherweise Ultraschallmessanordnungen unter Berücksichtigung zweier turnusmässiger Funktionsüberprüfungen bis zu 15 Jahre im Einsatz verbleiben, muss aber die Messgenauigkeit langzeitstabil gewährleistet werden. Geometrieänderungen der gesamten Ultraschallmessanordnung dürfen die Messgenauigkeit nicht über zulässige, genormte Taleranzgrenzen hinweg beeinflussen.

Hingegen hat sich gezeigt, dass nicht nur Flügelraddurchflussmesser sondern auch Ultraschalldurchflussmesser auf Geometrieänderungen durch das sie umströmende bzw. durchströmende Medium empfindlich reagieren können. Dabei kann die Geometrieänderung ihren Einfluss geltend machen, wenn nur einzelne Komponenten oder aber die gesamte Messstrecke betroffen sind.

In der US 2003/0131667 A1 wird ein Ultraschall-Durchflussmesser beschrieben, der auch ein Messverfahren zur Ermittlung von Ablagerungen an einer Wand des Ultraschallmesskanals umfasst. Der Ultraschall-Durchflussmesser umfasst hierzu mehrere Wandlerpaare, die jeweils einem anderen Schallausbreitungspfad innerhalb des Ultraschallmesskanals zugeordnet sind. Zur Ermittlung der Ablagerungen werden die ermittelten Ausbreitungsgeschwindigkeiten der verschiedenen Schallausbreitungspfade miteinander verglichen.

In der EP 0 785 443 A2 wird ein Verfahren und eine Einrichtung zur Laufzeitmessung eines akustischen Signals beschrieben. Der Einsatz erfolgt insbesondere bei einem Ultraschall-Durchflussmesser. Es kommt ein Impulszähler zum Einsatz, der eine Nulldurchgangsauswahl und damit eine rechnerische Auswertung der über mehrere Nulldurchgänge gemessenen Laufzeiten ermöglicht.

In der EP 0 762 086 A3 wird ein Verfahren zur Ultraschallmessung von Durchflussmengen von strömenden Fluiden beschrieben. Die Messungen werden dabei im eingeschwungenen Zustand durchgeführt, bei dem das Empfangssignal mit konstanter Amplitude ansteht.

Darstellung der Erfindung

Der Erfindung liegt die Aufgabe zugrunde, ein Messverfahren für einen Ultraschallmesskanal der vorstehend genannten Gattung derart weiterzubilden, dass selbst bei einer geometrischen Veränderung mindestens einer Wandung eines Ultraschallmesskanals, beispielsweise hervorgerufen durch Schwebeteilchen im Medium, eine genaue Messung ermöglicht wird.

Die Lösung der der Erfindung zugrunde liegenden Aufgabe ist in Anspruch 1 angegeben. Den Erfindungsgedanken vorteilhaft weiterbildende Merkmale sind Gegenstand der Unteransprüche .

Der Kern der vorliegenden Erfindung ist darin zu sehen, dass die Nulldurchgänge der sinusförmigen Empfangssignale (Empfangsspannung) des zweiten Ultraschallwandlers eines Ultraschallmesskanals -erfasst während des normalen Betriebs dieses Ultraschallmesskanals- mit denjenigen Nulldurchgängen des "jungfräulichen", das heisst geometrisch unveränderten Ultraschallmesskanals verglichen werden und hieraus eine Geometrieänderung des Messkanals feststellbar ist.

Wesentlich dabei ist, dass der Einfluss der Geometrieänderung insbesondere für diejenigen Anteile eines empfangenen Ultraschallwellensignals spürbar ist, die mit den veränderten Messkanalwandungen Kontakt haben, nämlich der Reflektionsstrahl -wie bereits oben angesprochen. Es ist nämlich die Laufzeit dieses Reflektionsstrahls, die sich entsprechend den geometrischen Laufwegänderung in einem Ultraschallmesskanal verändert. Das heisst aber, dass sich die Phasenverschiebung zwischen dem Direktstrahl und dem Reflektionsstrahl durch die Geometrieänderung verändert. Dabei umfassen Geometrieänderungen des Ultraschallmesskanals sowohl mögliche Verschmutzungen als auch mögliche Abtragungen innerhalb des Messkanals.

Erfindungsgemäss werden die Laufzeiten $t_l$ von Nulldurchgängen ($t_L, t_M, t_N,...$) vorbestimmter Ordnungen des unveränderten Ultraschallmesskanals vermessen und abgespeichert. Soll nun eine Geometrieänderung festgestellt werden, erfolgt eine erneute Messung der Laufzeiten $t_l$ dieser Nulldurchgänge ($t_l, t_m, t_n,...$) der vorbestimmten Ordnungen. Die relative Verschiebung von Nullstellen vorbestimmter Ordnungen bei geometrisch unverändertem bzw. geometrisch verändertem Ultraschallmesskanal ermöglichen die Identifikation einer Geometrieänderung.

Mit Vorteil werden die Laufzeiten $t_l$ der Nulldurchgänge ($t_L, t_M, t_N,...$) vorbestimmter Ordnungen des unveränderten Ultraschallmesskanals bei konstanter Temperatur T des Ultraschallmesskanals und bei konstanter Strömungsgeschwindigkeit v des sich im Ultraschallmesskanal befindlichen Mediums erfasst. Ein solches Nullstellenmuster ist dann Basis für den späteren Vergleich mit im Betrieb erfassten Nullstellenmustern bei gleicher Temperatur T und gleicher Strömungsgeschwindigkeit v des sich im Ultraschallmesskanal befindlichen Mediums. Selbstverständlich sind eine wählbare Anzahl von Nullstellenmustern bei unterschiedlichen, aber konstanten Temperaturen bzw. Strömungsgeschwindigkeiten im jungfräulichen Zustand eines Ultraschallmesskanals ermittelbar und in einem Speicher für spätere Vergleiche ablegbar.

Des Weiteren kann durch die Bestimmung von Differenzen aus den ermittelten Laufzeiten $t_l$ im unveränderten Zustand und denjenigen Laufzeiten $t_l$ im veränderten Zustand und der anschliessende Vergleich dieser Differenzen eine Geometrieänderung des Ultraschallmesskanals festgestellt werden.

Eine weitere Ausgestaltung der Erfindung sieht vor, dass durch die Bestimmung eines Differenzenquotienten aus den ermittelten Laufzeiten $t_l$ im unveränderten Zustand und denjenigen Laufzeiten $t_l$ im veränderten Zustand und der anschliessende Vergleich dieser Differenzenquotienten Im unveränderten und im veränderten Zustand des Ultraschallmesskanals eine Geometrieänderung erkannt werden kann.

Eine weitere Lösung der der Erfindung zugrunde liegenden Aufgabe sieht vor, dass ein erstes Ultraschallanregungssignal mit einer Amplitude A und einer Anzahl p Taktimpulsen von einem ersten Ultraschallwandler ausgesendet wird und ein daraus resultierendes erstes Ultraschallwellensignal von einem zweiten Ultraschallwandler empfangen wird und unmittelbar anschliessend an die Anzahl p Taktimpulse des ersten Ultraschallanregungssignals mindestens ein weiteres, zweites Ultraschallanregungssignal mit einer Amplitude x*A, mit x grösser 1, von dem ersten Ultraschallwandler mit einer Anzahl q Taktimpulsen ausgesendet wird. Mit Vorteil wird durch das erste Anregungssignal sowohl der erste als auch der zweite Ultraschallwandler eingeschwungen, womit das Ultraschallwellensignal, das durch das zweite Anregungssignal erzeugt wird, von dem zweiten Ultraschallwandler im eingeschwungenen Zustand erfasst werden kann. Diese erfindungsgemässe doppelte Anregung ermöglicht, dass das am eingeschwungenen, zweiten Ultraschallwandler empfangene Ultraschallwellensignal von Beginn an eine ausreichende Signalamplitude aufweist, die gross genug ist, um vom ersten Eintreffen an die Nullstellen deutlich abgehoben auszubilden.

Nun werden die Laufzeiten $t_l$ von Nulldurchgängen ($t_L, t_M, t_N,...$) vorbestimmter Ordnungen des geometrisch unveränderten Ultraschallmesskanals vermessen und abgespeichert. Soll nun eine Geometrieänderung des Messkanals ermittelt werden, erfolgt eine erneute Messung der Laufzeiten $t_l$ dieser Nulldurchgänge ($t_l, t_m, t_n,...$) gleicher Ordnungen. Die relative Verschiebung von Nullstellen vorbestimmter Ordnungen zwischen unverändertem und verändertem Ultraschallmesskanal ermöglicht die Identifikation einer Geometrieänderung.

Des Weiteren kann durch die Bestimmung von Differenzen aus den ermittelten Laufzeiten $t_l$ im unveränderten Zustand und denjenigen Laufzeiten $t_l$ im veränderten Zustand und der anschliessende Vergleich dieser Differenzen eine Geometrieänderung des Ultraschallmesskanals identifiziert werden.

Eine weitere Ausgestaltung der Erfindung sieht vor, dass durch die Bestimmung eines Differenzenquotienten aus den ermittelten Laufzeiten $t_l$ im unveränderten Zustand und denjenigen Laufzeiten $t_l$ im veränderten Zustand und der anschliessende Vergleich dieser Differenzenquotienten im unveränderten und im veränderten Zustand des Ultraschallmesskanals eine Geometrieänderung erkannt werden kann.

Die Erfindung sieht vor, dass für die Ermittlung der Geometrieänderung des Ultraschallmesskanals mindestens eine Laufzeit ($t_L, t_M, t_N,..., t_l, t_m, t_n,...$) verwendet wird, die zu einem Signalbereich des empfangenen Ultraschallwellensignals gehört, welcher Signalbereich ausschliesslich aus Direktstrahlanteilen des Ultraschallwellensignals besteht, und dass mindestens eine Laufzeit ($t_L$, $t_M$, $t_N$,..., $t_l$, $t_m$, $t_n$,...) verwendet wird, die zu einem Signalbereich des empfangenen Ultraschallwellensignals gehört, welcher Signalbereich zumindest auch Refilektionsstrahlanteile des empfangenen Ultraschallwellensignals umfasst. Diejenige Laufzeit ($t_L$, $t_M$, $t_N$,..., $t_l$, $t_m$, $t_n$,...) die zum Signalbereich mit ausschliesslich Direktstrahlanteilen gehört, wird als frühe Laufzeit bezeichnet; diejenige Laufzeit, die in den Signalbereich mit Reflektionsstrahlanteilen fällt, wird als späte Laufzeit bezeichnet.

Kurze Beschreibung der Figuren

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen die

Fig. 1: eine Schnittdarstellung einer bekannten Ultraschallmessanordnung mit einem Ultraschallmesskanal und einem ersten und einem zweiten Ultraschallwandler;

Fig. 2: ein Ultraschallwellensignal des zweiten Ultraschallwandlers, erzeugt durch ein Anregungssignal des ersten Ultraschallwandlers, bestehend aus einem Dlrektstrahl und einem Reflektionsstrahl;

Fig. 3a: ein Ultraschallwellensignal des zweiten Ultrawandlers, erzeugt durch ein Anregungssignal des ersten Ultraschallwandlers im unveränderten und Im veränderten Ultraschallmesskanal;

Fig. 3b: einen vergrösserten Anfangsbereich des in Fig. 3a dargestellten Ultraschallwellensignals;

Fig. 4a: ein Ultraschallwellensignal des zweiten Ultrawandlers, erzeugt durch ein erstes und ein zweites Anregungssignal des ersten Ultraschallwandlers im unveränderten und im veränderten Ultraschallmesskanal, und

Fig. 4b: einen vergrösserten Anfangsbereich des In Fig. 4a dargestellten Ultraschallwellensignals.

Wege zur Ausführung der Erfindung, gewerbliche Verwendbarkeit

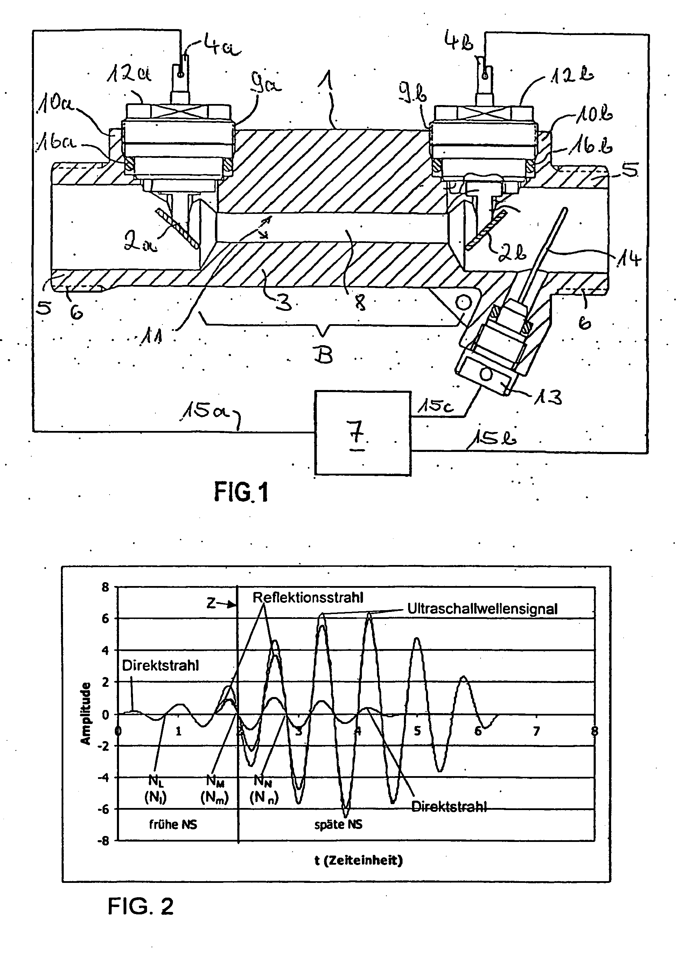

Fig. 1 zeigt einen Ultraschall-Durchflussmesser 1, der z. B. als Wasser- oder Wärmemengenzähler in Haushalten Verwendung findet. Prinzipiell sind auch industrielle Verwendungen, z. B. zur Durchflussmessung von sonstigen flüssigen oder gasförmigen Medien, insbesondere chemischen Flüssigkeiten oder Gasen, möglich. Der Ultraschall-Durchflussmesser 1 wird nachfolgend mit Durchflussmesser 1 bezeichnet. Der Durchflussmesser 1 umfasst zunächst ein Messrohr 3, das in eine nicht näher gezeigte Leitung einer Versorgungsanlage, z.B. einer Hauswasserversorgung, zwischengeschaltet wird. Er weist dazu endseitige Anschlussflansche 5 auf, die außenseitig mit Gewinden 6 versehen sind. Das Messrohr 3 weist innenseitig über dem Bereich B eine Verengung seines Innenquerschnitts auf. Dieser von dem Medium zu durchströmende Bereich ist als Messkanal 8 bezeichnet. An den Enden des Messkanals 8 sind in der nicht näher bezeichneten Außenwand des Messrohres 3 zueinander beabstandete Flansche 10a und 10b angeordnet, in denen jeweils ein zugehöriger Ultraschallkopf 12a und 12b angeordnet ist. Die Ultraschallköpfe 12a und 12b können allgemein nach dem Stand der Technik ausgestaltet sein. Bevorzugt sind die Ultraschallköpfe 12a und 12b als so genannte Topfwandler mit einem Metallgehäuse, insbesondere aus Messingwerkstoff, ausgeführt. Derartige Ultraschallköpfe (auch Schallsensoren genannt) sind beispielsweise aus der EP 0 679 874 und der EP 0 858 844 A2 bekannt.

Die Ultraschallköpfe 12a und 12b sind in ihren jeweiligen Flanschen 10a bzw. 10b bevorzugt mittels Gewinde 9a und 9b eingeschraubt. Zur zusätzlichen Abdichtung gegenüber dem Innenraum des Messrohres 1 kann ein Dichtring 16a bzw. 16b vorgesehen sein. Die nachfolgenden Ausführungen gelten für beide Ultraschallköpfe mit ihren jeweiligen Flanschen und Umlenkspiegeln sinngemäß.

Die Flansche 10a und 10b mit den dazugehörigen Ultraschallköpfen 12a bzw. 12b sind derart am Messrohr 1 befestigt, dass die Ultraschallköpfe 12a und 12b Schallwellen senkrecht zur Flussrichtung des Mediums in das Innere des Messrohres 1 senden. Selbstverständlich sind die Ultraschallköpfe 12a und 12b über Ihre jeweiligen Anschlussfahnen 4a und 4b und Leitungen 15a, 15b mit einer Verarbeitungseinrichtung 7 verbunden. Die Verarbeitungseinrichtung 7 dient dabei wie allgemein aus dem Stand der Technik bekannt zum Ansteuern der Ultraschallköpfe 12a, 12b und zum Auswerten ihrer Empfangssignale.

Zusätzlich ist ein Temperatursensor 13 vorgesehen sein, der ebenfalls mit der Verarbeitungseinrichtung 7 über eine Leitung 15c verbunden ist und mit seinem Fühlerende 14 in das Messrohr 3 und somit in den Medlumstrom hineinragt.

Zur Messung der Durchflussmenge wird, wie aus dem Stand der Technik allgemein bekannt, das Ultraschallsignal von einem der Ultraschallköpfe zum anderen und umgekehrt gesendet. Aus dem Laufzeitunterschied der Signale - mit und gegen den Mediumstrom -wird in der Verarbeitungseinrichtung 7 die Fließgeschwindigkeit ermittelt. Unter Berücksichtigung des Querschnitts der Messstrecke 8 kann dann rechnerisch die Durchflussmenge ermittelt werden.

Um das Ultraschallsignal von den Ultraschallköpfen 12a, 12b längs durch die Messstrecke 8 zu führen, wird es über Umlenkspiegel 2a und 2b umgelenkt.

Fig. 2 zeigt ein Ultraschallwellensignal des zweiten Ultraschallwandlers, erzeugt durch ein Anregungssignal des ersten Ultraschallwandlers. Eine senkrechte Achse Z teilt das Ultraschallwellensignal in zwei Zeitbereiche, einen frühen Zeitbereich links dieser Achse Z und einen späten Zeitbereich rechts der Achse Z. Im frühen Zeitbereich ist derjenige Signalbereich des Ultraschallwellensignals anzutreffen, der zum Empfangsbeginn des zweiten Ultraschallwandlers 12b als erstes auf diesen trifft, nämlich der Direktstrahl, wie bereits erläutert. Mit der Achse Z beginnt derjenige Signalbereich des Ultraschallwellensignals, der Anteile des Reflektionsstrahls umfasst. Dieser letztere Signalbereich ist der späte Zeitbereich. Entsprechend dieser Definition von frühem und spätem Zeitbereich, also vor bzw. hinter der Achse Z, weist das Ultraschallwellensignal Nullstellen (NS) auf, die im folgenden entsprechend "frühe" bzw. "späte" Nullstellen genannt werden.

Der Direktstrahlanteil des Ultraschallwellensignals ist unabhängig von jeder geometrischen Veränderung innerhalb eines Messkanals 8 immer gleich, vorausgesetzt, dass die Temperatur T und die Strömungsgeschwindigkeit v des sich im Ultraschallmesskanal befindlichen Mediums vordefiniert und konstant sind. Demzufolge ist auch die Nullstelle (NS) $N_L$ im Signalbereich des Direktstrahls, die so genannte frühe Nullstelle, eine fixe Nullstelle, das heisst, sie ändert ihre Lage nicht mit einer Geometrieänderung im Ultraschallmesskanal. Anders verhält sich das mit den späten Nullstellen $N_M$, $N_N$, die im Falle einer Geometrieänderung im Ultraschallmesskanal ihre Lage ändern. Grundsätzlich weist das Ultraschallsignal in Fig. 2 eine charakteristische Form auf, die im geometrisch unveränderten bzw. im veränderten Ultraschallmesskanal ähnlich aussieht. Aus diesem Grund sind in der Fig. 2 die Nullstellen zum einen mit den Bezugszeichen für den unveränderten (grosse Indizes) und zum anderen für den veränderten Zustand in Klammern (kleine Indizes) dargestellt.

Die Nullstellen $N_L$, $N_M$, $N_N$ werden im geometrisch unveränderten Zustand des Ultraschallmesskanals 8 erfasst und in der Verarbeitungseinrichtung 7 gespeichert, und zwar bei einer konstanten Temperatur und einer konstanten Strömungsgeschwindigkeit v des sich im Ultraschallmesskanal befindlichen Mediums. Dabei wird berücksichtigt, dass mindestens eine Nullstellen ein frühe Nullstelle $N_L$ ist und mindestens eine Nullstelle eine späte Nullstelle $N_M$, $N_N$ ist. Für ausgewählte Temperaturen T und ausgewählte Strömungsgeschwindigkeiten v im Ultraschallmesskanal können erfindungsgemäss im unveränderten Zustand eine Vielzahl von Nullenstellenmustern erfasst und abgespeichert werden, so das im Betrieb erfasste Nullstellen mit ihren Laufzeiten bei veränderter Geometrie mit entsprechend der Betriebstemperatur und der Betriebsströmungsgeschwindigkeit abgespeicherten Nullstellen mit ihren Laufzeiten bei unveränderter Geometrie verglichen werden können.

Die im Signalbereich des Direktstrahls auftretende, frühe Nullstelle $N_L$ hat die Besonderheit, dass ihre Laufzeit $t_L$ im geometrisch unveränderten und im geometrisch verändertem Zustand gleich ist, es gilt also für ein frühe Nullstelle ein und derselben Ordnung: $N_L = N_l$ und $t_L = t_l$.

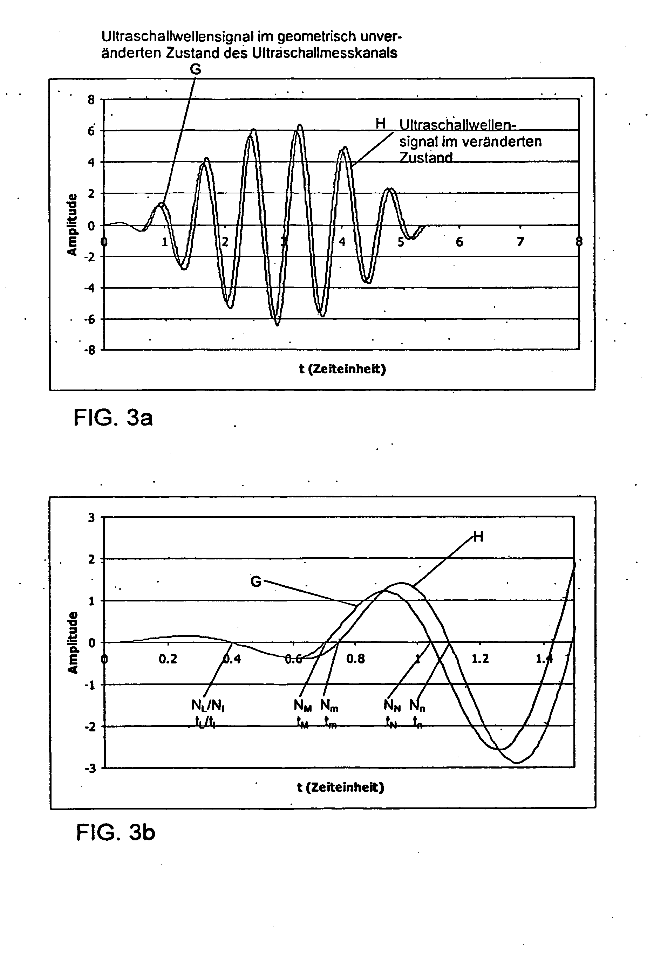

Die Fig. 3a zeigt ein Ultraschallwellensignal G des zweiten Ultraschallwandlers 12b, erzeugt durch ein Anregungssignal des ersten Ultraschallwandlers 12a im geometrisch unveränderten Zustand des Ultraschallmesskanals 8. Ein weiteres Ultraschallwellensignal H ist in dem Ultraschallmesskanal bei veränderter Kanalgeometrie erfasst worden. Die Fig. 3b zeigt einen vergrösserten Anfangsbereich der Ultraschallwellensignale G und H im Anfangsbereich der Darstellung in Fig. 3a.

Das sinusförmige Signal G weist an Nullstellen der Ordnungen $N_L$, $N_M$, $N_N$ entsprechende Laufzeiten $t_L$, $t_M$, $t_N$ auf. Die Indizes mit Grossbuchstaben zeigen hierbei an, dass die Laufzeiten $t_L$, $t_M$, $t_N$ der Nullstellen $N_L$, $N_M$, $N_N$ im unverschmutzten Zustand des Messkanals 8 erfasst wurden und in der Verarbeitungseinrichtung 7 abgespeichert wurden. Die Index-Buchstaben symbolisieren die Ordnung der Nullstellen selbst. Dabei ist es möglich, dass der Buchstabe "L" beispielsweise für die erste Nullstelle des Sinussignals steht und die Buchstaben "M" und "N" beispielsweise für die Nullstellen 2. und 3. Ordnung. Es ist aber auch denkbar im Sinne der Erfindung, dass die Indexbuchstaben "L, M, N" für die Nullstellen 2, 4 und 6 des Sinussignals stehen oder für beliebig andere Ordnungen der Nullstellen stehen.

Der zeitliche Versatz bzw. die Phasenverschiebung zwischen dem Ultraschallwellensignal G und dem Ultraschallwellensignal H zeigt auf die Geometrieänderung des Messkanals 8. Die Kleinbuchstaben als Indizes am Ultraschallwellensignal B zeigen, dass diese Nullstellen $N_l$, $N_m$, $N_n$ und ihre zugehörigen Laufzeiten $t_l$, $t_m$, $t_n$ im veränderten Zustand des Messkanals 8 erfasst wurden. Für die Ordnung der Nullstellen $N_l$, $N_m$, $N_n$ gilt entsprechendes wie oben zu den Nullstellen $N_L$, $N_M$, $N_N$ erwähnt. Die Phasenverschiebung zwischen einer Laufzeit im unveränderten Zustand $t_M$ und einer Laufzeit im veränderten Zustand $t_m$ zeigt, dass sich die Nullstellen im letzteren Zustand verschieben, das heisst sie laufen mit einer Geometrieänderung.

Bildet man nun beispielsweise die Differenzen $E = t_N - t_L$ oder $F = t_N - t_M$ bzw. $e = t_n - t_l$ oder $f = t_n - t_m$ und vergleicht die Differenzen E und e bzw. F und f miteinander, so kann hierdurch eine Geometrieänderung des Messkanals 8 festgestellt werden.

Bildet man einen Differenzenquotienten

$$f_l = \frac{t_N - t_L}{t_N - t_M}$$ für den unveränderten Zustand und speichert diesen in der Verarbeitungseinrichtung 7 ab und vergleicht diesen abgespeicherten Differenzenquotienten $f_l$ mit einem später berechneten Differenzenquotienten $$f_i = \frac{t_n - t_l}{t_n - t_m}$$ für einen veränderten Zustand, so zeigt der Vergleich beider Differenzenquotienten $f_l$ und $f_l$ die Geometrieänderung des Messkanals 8 auf. Die Geometrieänderung kann dann auch durch Vergleich der Quotienten $f_l$ (abgespeichert) des unveränderten und $f_l$

des veränderten Geräts gemäß $\dfrac{f_I}{f_i} = \dfrac{\dfrac{t_N - t_L}{t_N - t_M}}{\dfrac{t_n - t_l}{t_n - t_m}}$ ermittelt werden.

Ist einmal erkannt, dass der Ultraschallmesskanal 8 eine Geometrieänderung aufweist, so ist die Laufzeitmessung mit Hilfe einer empirisch ermittelten Beziehung zwischen Korrekturfaktor und Nullstellenverschiebung bzw. Phasenverschiebung zu korrigieren. Auf diese Weise ist die eigentliche Laufzeitmessung zur Durchflussmessung eines strömenden Mediums erstmalig auch bei einem geometrisch veränderten Messkanal 8 hochgenau durchführbar.

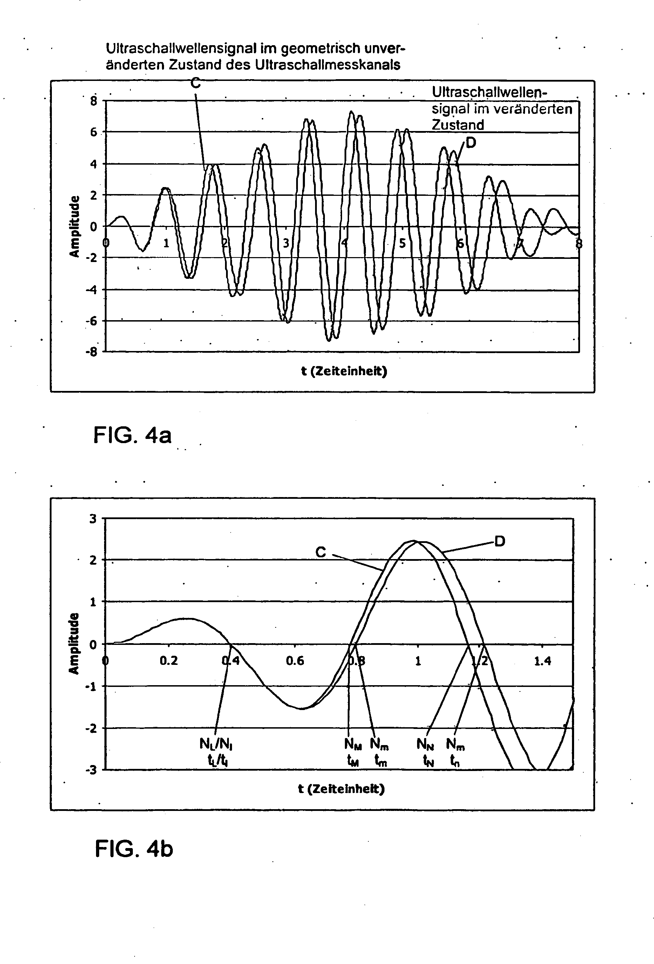

Aufgrund des langsamen Einschwingverhaltens sowohl des sendenden, ersten Ultraschallwandlers 12a als auch des empfangenden, zweiten Ultraschallwandlers 12b ist es möglich, dass zeitlich früh auf diesen treffende Signale zu derartig geringen Amplituden führen, wie Fig. 3b zeigt, dass zugehörige Nullstellen von der verwendeten Auswerteelektronik schlecht erfassbar sind. Je nach Geometrie der verwendeten Messstrecke kann es allerdings für die Ermittlung einer Geometrieänderung nötig sein, dass diese Nullstellen in das beschriebene Verfahren einbezogen werden müssen. Um diese zeitlich frühen Signale geringer Spannungsamplitude dennoch besser auswerten zu können, wird in einer weiteren Ausgestaltung der Erfindung zunächst ein erstes Ultraschallanregungssignal mit einer Amplitude A und einer Anzahl p Taktimpulsen von einem ersten Ultraschallwandler 12a ausgesendet und ein daraus resultierendes erstes Ultraschallwellensignal von einem zweiten Ultraschallwandler 12b empfangen, wobei sowohl der erste Ultraschallwandler 12a als auch der zweite Ultraschallwandler 12b aufgrund dieses ersten Anregungssignals bzw. dieses empfangenen Ultraschallwellensignals einen Einschwingvorgang vollziehen. Anschliessend wird ein weiteres Ultraschallanregungssignal mit einer Anzahl q Taktimpulsen und mit einer vergrösserten Amplitude x•A von dem ersten, eingeschwungenen Ultraschallwandler 12a ausgesendet; das sich aus diesem weiteren Ultraschallanregungssignal ergebene zweite Ultraschallwellensignal C, D -wie in den Fig. 4a, b analog zu den Fig. 3a, b gezeigt- trifft auf den nun eingeschwungenen zweiten Ultraschallwandler 12b und überlagert sich dort mit dem ersten Signal. Das dort erfasste Ultraschallwellensignal C, D Ist vorteilhafterweise nun vom ersten Moment des Eintreffens eindeutig detektierbar, da der zweite Ultraschallwandler sich bereits im eingeschwungenen Zustand befindet und bei der Überlagerung aus erster und zweiter Anregung im Ergebnis die zweite Anregung dominiert.

Mit Vorteil können aus dem zweiten Ultraschallwellensignal C, D die Nullstellen $N_L$, $N_M$, $N_N$ bzw. $N_l$, $N_m$, $N_n$ und ihre zugehörigen Laufzeiten $t_L$, $t_M$, $t_N$ bzw. $t_l$, $t_m$, $t_n$ ermittelt werden und zwar für den unveränderten (C) und den veränderten (D) Zustand des Messkanals 8. Die Werte für den unveränderten Zustand werden wiederum als abgespeicherte Werte in der Verarbeitungseinrichtung 7 abgelegt bzw. von dort zwecks Vergleich entnommen. Die Geometrieänderung lässt sich dann durch direkten Vergleich von Nullstellen gleicher Ordnung feststellen.

Des Weiteren kann mittels der abgespeicherten und der im Betrieb erfassten Laufzeiten die Berechnung von Differenzen E, F bzw. e, f wie bereits oben erläutert durchgeführt werden. Auch hier zeigt der Vergleich der Differenzen E, F mit e, f auf eine Geometrieänderung des Messkanals 8.

Entsprechendes gilt auch hier für aus den Laufzeiten $t_L$, $t_M$, $t_N$ bzw. $t_l$, $t_m$, $t_n$ gebildete Differenzenquotienten $f_I$ und $f_l$ nach obigen Formeln, die im Vergleich miteinander eine Geometrieänderung erkennen lassen, wobei $f_I$ der Differenzenquotient im unveränderten Zustand ist, der in der Verarbeitungseinrichtung 7 abgespeichert ist und ihr zwecks Vergleich entnommen wird und $f_l$ der Differenzenquotient im veränderten Zustand ist.

## Bezugzeichenliste

| 1 | Durchflussmesser |
|---|---|
| 2a, 2b | Umlenkspiegel |
| 3 | Messrohr |
| 4a, 4b | Anschlussfahne |
| 5 | Anschlussflansch |
| 6 | Gewinde |
| 7 | Verarbeitungseinrichtung |
| 8 | Messkanal |
| 9a, 9b | Gewinde |
| 10a, 10b | Flansch |
| 12a, 12b | Ultraschallkopf |
| 13 | Temperatursensor |
| 14 | Fühlerende |
| 15a, 15b, 15c | Leitung |
| 16a, 16b | Dichtring |

## Patentansprüche

1. Messverfahren für einen Ultraschall-Durchflussmesser (1) mit einem Ultraschallmesskanal (8) wobei ein Ultraschallanregungssignal mit einer Amplitude A und einer Anzahl p Taktimpulsen von einem ersten Ultraschallwandler (12a) ausgesendet wird und ein daraus resultierendes Ultraschallwellensignal (G, H, C, D) von einem zweiten Ultraschallwandler (12b) empfangen wird, um eine Geometrieänderung des Ultraschall-Messkanals (8) zu erfassen, **dadurch gekennzeichnet, dass**

a) von einem bei geometrisch unverändertem Ultraschallmesskanal (8) aufgenommenen Ultraschallwellensignal (G, C) mindestens eine ursprüngliche Laufzeit ($t_L$) früher Nullstellen ($N_L$) und mindestens eine ursprüngliche Laufzeit ($t_M$, $t_N$) später Nullstellen ($N_M$, $N_N$) ermittelt und abgespeichert werden,

b) von einem bei geometrisch verändertem Ultraschallmesskanal (8) aufgenommenen Ultraschallwellensignal (H, D) mindestens eine veränderte Laufzeit ($t_l$) früher Nullstellen ($N_l$) und mindestens eine veränderte Laufzeit ($t_m$, $t_n$) später Nullstellen ($N_m$, $N_n$) ermittelt werden, und

c) die veränderten Laufzeiten ($t_l$, $t_m$, $t_n$) mit den abgespeicherten unveränderten Laufzeiten ($t_L$, $t_M$, $t_N$) verglichen werden und hieraus eine Geometrieänderung des Ultraschallmesskanals (8) ermittelt wird, wobei

d) eine Laufzeit ($t_L$, $t_l$) früher Nullstellen ($N_L$, $N_l$) eine solche ist, die zu einem ersten Signalbereich des empfangenen Ultraschallwellensignals (G, H, C, D) gehört, welcher erste Signalbereich ausschließlich aus Direktstrahlanteilen des Ultraschallwellensignals (G, H, C, D) besteht, und eine Laufzeit ($t_m$, $t_N$, $t_m$, $t_n$) später Nullstellen ($N_M$, $N_N$, $N_m$, $N_n$) eine solche ist, die zu einem zweiten Signalbebreich des empfangenen Ultraschallwellensignals (G, H, C, D) gehört, welcher zweiter Signalbereich zumindest auch Reflektionsstrahlanteile des empfangenen Ultraschallwellensignals (G, H, C, D) umfasst.

2. Messverfahren nach Anspruch 1, **dadurch gekennzeichnet, dass** zur Ermittlung der Geometrieänderung des Ultraschallmesskanals (8) mindestens eine erste Differenz aus den ursprünglichen Laufzeiten ($t_L$, $t_N$, $t_M$) und mindestens eine zweite Differenz aus den veränderten Laufzeiten ($t_l$ $t_n$, $t_m$) gebildet und miteinander verglichen werden.

3. Messverfahren nach Anspruch 1 oder 2, **dadurch gekennzeichnet, dass** zur Ermittlung der Geometrieänderung des Ultraschallmesskanals (8) ein erster Quotient zweier Differenzen aus den ursprünglichen Laufzeiten ($t_L$, $t_N$, $t_M$) und ein zweiter Quotient zweier Differenzen aus den veränderten Laufzeiten ($t_l$, in, $t_m$) gebildet und miteinander verglichen werden.

4. Messverfahren nach einem der vorhergehenden Ansprüche, **dadurch gekennzeichnet, dass** zur Ermittlung der Geometrieänderung des Ultraschallmesskanals (8) ein erster Quotient zweier Differenzen aus den ursprünglichen Laufzeiten ($t_L$, $t_N$, $t_M$) und ein zweiter Quotient zweier Differenzen aus den veränderten Laufzeiten ($t_l$, $t_n$, $t_m$ gebildet werden sowie ein Quotient des ersten und des zweiten Quotienten gebildet wird.

5. Messverfahren nach einem der vorhergehenden Ansprüche, **dadurch gekennzeichnet, dass** das Ultraschallanregungssignal anschließend an ein vorhergehendes Ultraschallanregungssignal ausgesendet wird, wobei das vorhergehende Ultraschallanregungssignal eine kleinere Amplitude hat sowie der erste und der zweite Ultraschallwandler (12a, 12b) aufgrund des vorhergehenden Ultraschallanregungssignals einen Einschwingvorgang vollziehen.

6. Messverfahren nach einem der vorhergehenden Ansprüche, **dadurch gekennzeichnet, dass** die frühen Nullstellen ($N_L$, $N_l$) jeweils durch die erste Nullstelle des Ultraschallwellensignals (G, C) gebildet sind und die späten Nullstellen ($N_M$, $N_N$, $N_m$, $N_n$) jeweils durch die zweiten und dritten Nullstellen des Ultraschallwellensignals (G, C) gebildet sind.

**Claims**

1. Measuring method for an ultrasound flow meter (1) with an ultrasound measuring channel (8), wherein an ultrasound excitation signal is emitted with an amplitude A and number p of clock pulses by a first ultrasound converter (12a) and an ultrasound wave signal (G, H, C, D) resulting therefrom is received by a second ultrasound converter (12b) in order to determine a change in the geometry of the ultrasound measuring channel (8), **characterised in that**

a) from an ultrasound wave signal (G, C) received with a geometrically unchanged ultrasound measuring channel (8) at least one original running time (tL) of earlier zero points (NL) and at least one original running time (tM, tN) of later zero positions (NM, NN) are determined and saved,

b) from an ultrasound wave signal (H, D) received with a geometrically changed ultrasound measuring channel (8) at least one changed running time (tl) of earlier zero points (Nl) and at least one changed running time (tm,tn) of later zero points (Nm, Nn) are determined, and

c) the changed running times (tl, tm, tn) are compared with the saved unchanged running times (tL, tM, tN) and from this a change in geometry of the ultrasound measuring channel (8) is determined, wherein

d) a running time (tL, tl) of earlier zero points (NL, Nl) is such that it belongs to a first signal range of the received ultrasound wave signal (G, H, C, D), which first signal range consists exclusively of direct beam portions of the ultrasound wave signal (G, H, C, D), and a running time (tM, tN, tm, tn) of later zero points (NM, NN, Nm, Nn) is such that it belongs to a second signal range of the received ultrasound wave signal (G, H, C, D) which second signal range also comprises at least reflection beam portions of the received ultrasound wave signal (G, H, C, D).

2. Measuring method according to claim 1, **characterised in that** to determine the change in geometry of the ultrasound measuring channel (8) at least one first difference of the original running times (tL, tN, tM) and at least one second difference of the changed running times (tl, tn, tm) are formed and compared with one another.

3. Measuring method according to claim 1 or 2, **characterised in that** to determine the change in geometry of the ultrasound measuring channel (8) a first quotient of two differences of the original running times (tL, tN, tM) and a second quotient of two differences of the changed running times (tl, tn, tm) are formed and compared with one another.

4. Measuring method according to one of the preceding claims, **characterised in that** to determine the change in geometry of the ultrasound measuring channel (8) a first quotient of two differences of the original running times (tL, tN, tM) and a second quotient of two differences of the changed running times (tl, tn,m tm) are formed, and a quotient of the first and second quotients is formed.

5. Measuring method according to one of the preceding claims, **characterised in that** the ultrasound excitation signal is emitted following a preceding ultrasound excitation signal, wherein the preceding ultrasound excitation signal has a smaller amplitude and the first and the second ultrasound converter (12a, 12b) because of the preceding ultrasound excitation signal perform a transient oscillation.

6. Measuring method according to one of the preceding claims, **characterised in that** the early zero points (NL, Nl) are formed respectively by the first zero point of the ultrasound wave signal (G, C) and the late zero points (NM, NN, Nm, Nn) are formed respectively by the second and third zero points of the ultrasound wave signal (G, C).

## Revendications

1. Procédé de mesure pour un débitmètre par ultrasons (1) comprenant un canal de mesure d'ultrasons (8), un signal d'excitation ultrasonore d'une amplitude A et d'un nombre p d'impulsions d'horloge étant émit par un premier transducteur ultrasonore (12a) et un signal d'ondes ultrasonores (G, H, C, D) en résultant étant reçu par un second transducteur ultrasonore (12b) afin de détecter un changement géométrique du canal de mesure des ultrasons (8), **caractérisé en ce**

a) **qu'**un signal d'onde ultrasonore (G, C) enregistré par un canal de mesure d'ultrasons (8) géométriquement non modifié détermine et conserve en mémoire au moins un temps de propagation d'origine ($t_L$) pour un zéro passé ($N_l$) et au moins un temps de propagation d'origine ($t_M$, $t_N$) pour le zéro suivant ($N_M$, $N_N$),

b) **qu'**un signal d'onde ultrasonore (H, D) enregistré par un canal de mesure d'ultrasons (8) géométriquement modifié détermine au moins un temps de propagation modifié ($t_l$) au zéro passé ($N_l$) et au moins un temps de propagation modifié ($t_m$, $t_n$) au zéro suivant ($N_m$, $N_n$), et

c) **que** les temps de propagation modifiés ($t_l$, $t_m$, $t_n$) sont comparés aux temps de propagation non modifiés enregistrés ($t_L$, $t_M$, $t_N$) et qu'une modification de la géométrie du canal de mesure par ultrasons est ainsi déterminée,

d) un temps de propagation ($t_L$, $t_l$) pour un zéro passé ($N_L$, $N_l$) étant un temps de propagation qui appartient à un premier domaine de signal du signal d'ondes ultrasonores reçu (G, H, C, D), lequel premier domaine de signal étant exclusivement constitué par des parties de rayonnement direct du signal d'ondes ultrasonores (G, H, C, D), et un temps de propagation ($t_M$, $t_N$, $t_m$, $t_n$) au zéro suivant ($N_M$, $N_N$, $N_m$, $N_n$) étant un temps de propagation qui fait partie d'un second domaine de signal du signal d'ondes ultrasonores (G, H, C, D), domaine de signal qui comprend également des parties de rayonnement réfléchi du signal d'ondes ultrasonores (G, H, c, D) reçu.

2. Procédé de mesure selon la revendication 1 **caractérisé en ce que**, pour la détermination du changement géométrique du canal de mesure par ultrasons (8), au moins une première différence des temps de propagation d'origine ($t_L$, $t_N$, $t_M$) et au moins une seconde différence des temps de propagation modifiés ($t_l$, $t_m$, $t_n$) sont réalisées et qu'elles sont comparées l'une à l'autre.

3. Procédé de mesure selon les revendications 1 ou 2 **caractérisé en ce que**, pour la détermination du changement géométrique du canal de mesure par ultrasons (8), un premier quotient des deux différences à partir des temps de propagation d'origine ($t_L$, $t_M$, $t_N$) et un second quotient de deux différences des temps de propagation modifiés ($t_l$, $t_m$, $t_n$) sont effectués et comparés l'un à l'autre.

4. Procédé de mesure selon l'une des revendications précédentes **caractérisé en ce que**, pour la détermination du changement géométrique du canal de mesure des ultrasons (8), un premier quotient de deux différences à partir des temps de propagation d'origine ($t_L$, $t_M$, $t_N$) et un second quotient de deux différences des temps de propagation modifiés ($t_l$, $t_m$, $t_n$) sont réalisés, ainsi qu'un quotient du premier et du second quotient est effectué.

5. Procédé de mesure selon l'une des revendications précédentes **caractérisé en ce que** le signal d'excitation des ultrasons est émis à la suite d'un signal d'excitation ultrasonore précédent, le signal d'excitation ultrasonore précédent possédant une amplitude plus faible, et que le premier et le second transducteurs ultrasonores (12a, 12b) réalisent un état transitoire à cause du signal d'excitation ultrasonore précédent.

6. Procédé de mesure selon l'une des revendications précédentes **caractérisé en ce que** les zéros passés ($N_L$, $N_l$) sont respectivement formés par le premier zéro du signal d'onde ultrasonore (G, C) et que les zéros suivants ($N_M$, $N_N$, $N_m$, $N_n$) sont respectivement formés par les deuxième et troisième zéros du signal d'onde ultrasonore (G, C).

**FIG.1**

**FIG. 2**

Ultraschallwellensignal im geometrisch unveränderten Zustand des Ultraschallmesskanals

FIG. 3a

FIG. 3b

EP 1 731 883 B1

Ultraschallwellensignal im geometrisch unveränderten Zustand des Ultraschallmesskanals

FIG. 4a

FIG. 4b

12

EP 1 731 883 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030131667 A1
- EP 0785443 A2
- EP 0762086 A3
- EP 0679874 A
- EP 0858844 A2